(19) Europäisches Patentamt
European Patent Office
Office européen des brevets

(11) **EP 1 657 535 B1**

(12) **EUROPÄISCHE PATENTSCHRIFT**

(45) Veröffentlichungstag und Bekanntmachung des
Hinweises auf die Patenterteilung:
**10.03.2010 Patentblatt 2010/10**

(51) Int Cl.:
*G01G 19/00* (2006.01)     *G07B 17/00* (2006.01)

(21) Anmeldenummer: **05024251.0**

(22) Anmeldetag: **08.11.2005**

(54) **Verfahren zum Ausrüsten einer Frankiermaschine mit einer Wiegeeinheit**

Method of equipping a franking machine with a postal weighing scale

Procédé pour équiper une machine d'affranchissement avec une balance postale

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **16.11.2004 DE 102004055346**

(43) Veröffentlichungstag der Anmeldung:
**17.05.2006 Patentblatt 2006/20**

(73) Patentinhaber: **Francotyp-Postalia GmbH**
**16547 Birkenwerder (DE)**

(72) Erfinder: **Kunde, Christoph**
**13469 Berlin (DE)**

(74) Vertreter: **Cohausz & Florack**
**Patent- und Rechtsanwälte**
**Bleichstraße 14**
**40211 Düsseldorf (DE)**

(56) Entgegenhaltungen:
**EP-A- 1 239 268**     **DE-A1- 4 408 232**
**DE-A1- 19 619 854**     **FR-A- 2 818 374**
**US-A- 5 661 268**

**Beschreibung**

Die vorliegende Erfindung betrifft ein Verfahren zum Ausrüsten, insbesondere zum Nachrüsten, einer Frankiermaschine mit einer Wiegeeinheit, bei dem in einem Verbindungsschritt die Wiegeeinheit mit einer ersten Verarbeitungseinrichtung der Frankiermaschine verbunden wird. Sie betrifft weiterhin eine Frankieranordnung, bei der das erfindungsgemäße Verfahren durchgeführt werden kann.

Für herkömmliche Frankiermaschinen stehen in der Regel damit verbindbare Wiegeeinheiten, wie Postgutwaagen oder dergleichen zur Verfügung, deren Messwerte an die Frankiermaschine weitergegeben werden, um automatisch anhand von Tariftabellen eines Postbeförderers den korrekten Frankierwert für das gewogene Poststück zu ermitteln.

Herkömmliche Frankiermaschinen werden häufig ohne fertig montierte Postgutwaage an den Kunden ausgeliefert. So sind Frankiersysteme für größere Postvolumina modular mit separatem Vereinzler, Waage, Frankiermaschine, Ablage usw. aufgebaut und werden daher häufig erst vor Ort beim Kunden zusammengesetzt. Bei Frankiermaschinen für kleinere und mittlere Postvolumina ist es häufig der Fall, dass diese ohne montierte Postgutwaage ausgeliefert werden. Der Kunde kann die Waage dann gegebenenfalls auch erst zu einem späteren Zeitpunkt ordern und nachrüsten.

Die jeweilige Frankiermaschine und die zugehörige Wiegeeinheit werden in der Regel zentral an einem oder wenigen Herstellungsorten hergestellt, dann aber an beliebig weit davon entfernte Standorte für die Frankiermaschine versandt. Hierbei besteht das Problem, dass die Erdbeschleunigung je nach geographischer Breite des Standorts der Frankiermaschine erheblich von der Erdbeschleunigung am Herstellungsort der Wiegeeinheit abweichen kann. Dies kann bei den üblicherweise verwendeten elektronischen Wiegeeinheiten einen erheblichen Einfluss auf das ausgegebene Messergebnis und damit auf den berechneten Frankierwert haben. Um Fehlfrankierungen zu vermeiden, ist es daher erforderlich, die Wiegeeinheit für den Standort der Frankiermaschine zu kalibrieren.

Diese Kalibrierung der Wiegeeinheit für den Standort der Frankiermaschine geschieht üblicherweise entweder vor Ort durch den Kunden oder einen Servicetechniker, indem dieser Testmessungen mit Probemassen vornimmt und entsprechende Eingaben an der Frankiermaschine oder der Wiegeeinheit vornimmt. Dieses Verfahren hat jedoch den Nachteil, dass es zum einen vergleichsweise aufwändig ist. Zum anderen ist es fehler- bzw. manipulationsanfällig, da eine bewusst oder unbewusst falsche Kalibrierung zu falschen Messwerten führt.

Alternativ kann bereits vor Versand der Wiegeeinheit am Herstellungsort eine Kalibrierung für den Standort der Frankiermaschine vorgenommen werden. Diese Variante hat den Nachteil, dass zu diesem Zeitpunkt der spätere Standort der Frankiermaschine bereits bekannt sein muss. Dies hat zur Folge, dass sich entweder die Lieferzeiten erhöhen, weil die Kalibrierung erst vorgenommen werden kann, wenn die Bestellung vorliegt. Andererseits können natürlich auch Wiegeeinheiten für unterschiedliche Standorte der Frankiermaschine vorgehalten werden, wodurch sich aber der Lagerhaltungsaufwand erhöht.

Für Waagen ist es allgemein bekannt, eine Kalibrierung für den Standort der Waage vor Ort ohne die Verwendung von Probemassen vorzunehmen. So ist es beispielsweise aus der DE 44 08 232 A1 bekannt, anhand einer satellitengestützten Ortung der Waage die Position der Waage zu bestimmen. Aus der so ermittelten Position der Waage wird dann ein Korrekturfaktor ermittelt, mit dem die für einen beliebigen Herstellungsort kalibrierte Waage dann für ihren aktuellen Standort nachkalibriert werden kann. Hiermit ist zwar eine zuverlässige Kalibrierung für den Standort der Waage möglich. Dies wird jedoch mit einem erheblichen Aufwand für die mit der Waage zu verbindenden Komponenten des Satellitenortungssystems erkauft.

Um den Aufwand für ein solches Satellitenortungssystem zu vermeiden, ist es aus der DE 196 19 854 A1 bekannt, die Waage mit einem Modem oder dergleichen zu versehen, über welches zur Kalibrierung der Waage über ein Telefonnetz eine Kommunikationsverbindung zu einer Datenzentrale hergestellt wird. Die Datenzentrale bestimmt dann aus einer im Rahmen der Kommunikationsverbindung übermittelten Ortsvorwahl des Telefonnetzes die Position der Waage. Anhand dieser Position bestimmt die Datenzentrale dann einen Korrekturfaktor, der an die Waage übermittelt wird und in der Waage zur Kalibrierung der Waage für ihren den Standort verwendet wird. Dieses Verfahren hat den Nachteil, dass zum Kalibrieren der Waage zunächst immer erst ad hoc eine Kommunikationsverbindung aufgebaut werden muss, bevor die Kalibrierung erfolgen kann.

Weitere Waagen sind bekannt, siehe FR 2 818 374, US 5 661 268 und EP 1 239 268.

Der vorliegenden Erfindung liegt daher die Aufgabe zu Grunde, ein Verfahren bzw. eine Frankieranordnung der eingangs genannten Art zur Verfügung zu stellen, welches bzw. welche die oben genannten Nachteile nicht oder zumindest in geringerem Maße aufweist und insbesondere eine schnelle und einfache standortgemäße Kalibrierung der an die Frankiermaschine angeschlossenen Wiegeeinheit ermöglicht.

Die vorliegende Erfindung löst diese Aufgabe ausgehend von einem Verfahren gemäß dem Oberbegriff des Anspruchs 1 durch die im kennzeichnenden Teil des Anspruchs 1 angegebenen Merkmale. Sie löst diese Aufgabe weiterhin ausgehend von einer Frankieranordnung gemäß dem Oberbegriff des Anspruchs 11 durch die im kennzeichnenden Teil des Anspruchs 11 angegebenen Merkmale. Sie löst ebenfalls diese Aufgabe ausgehend von einer Frankiermaschine gemäß Anspruch 21.

Der vorliegenden Erfindung liegt die technische Lehre zu Grunde, dass eine schnelle und einfache standortgemäße Kalibrierung der an die Frankiermaschine angeschlossenen Wiegeeinheit möglich ist, wenn in dem Verbindungsschritt eine für einen Vorkalibrierort kalibrierte Wiegeeinheit mit der ersten Verarbeitungseinrichtung verbunden wird. In einem Erfassungsschritt, der dem Verbindungsschritt nachfolgt, wird dann die Verbindung der Wiegeeinheit mit der ersten Verarbeitungseinrichtung erfasst. In einem Endkalibrierschritt, der dem Erfassungsschritt nachfolgt, erfolgt schließlich unter Verwendung einer der Frankiermaschine zugeordneten ersten Kalibriergröße eine Kalibrierung der Wiegeeinheit für den Standort der Frankiermaschine.

Die Verwendung einer für einen Vorkalibrierort kalibrierten Wiegeeinheit ermöglicht dabei zum einen die Verwendung einer ersten Kalibriergröße, mit deren Hilfe dann erste Messsignale der für den Vorkalibrierort vorkalibrierten Wiegeeinheit umgerechnet werden können, um so in einfacher Weise die für den Standort der Frankiermaschine kalibrierte zweite Messsignale zu erhalten.

Die Verwendung einer der Frankiermaschine zugeordneten ersten Kalibriergröße ermöglicht dabei zum anderen eine einfache und schnelle Kalibrierung der Wiegeeinheit, ohne dass beim Anschluss der Wiegeeinheit eine aufwändige Positionsbestimmung der Wiegeeinheit vorgenommen werden muss. Die Zuordnung der ersten Kalibriergröße zur Frankiermaschine hat den Vorteil, dass der Standort der Frankiermaschine in der Regel wegen der Bindung der Frankiermaschine an bestimmte zugeordnete Einlieferungsstellen für die damit frankierten Poststücke ohnehin mit ausreichender Genauigkeit bekannt ist. Eine weitere; separate Standortbestimmung für die Wiegeeinheit erübrigt sich hierdurch, sodass eine schnelle Kalibrierung der Wiegeeinheit möglich ist.

Insbesondere ist es hiermit möglich, die erste Kalibriergröße wegen ihrer Zuordnung zu der Frankiermaschine schon vor dem Verbinden der Wiegeeinheit mit der Frankiermaschine in die Frankiermaschine zu laden. Die Wiegeeinheit kann dann ohne weitere Positionsbestimmung bzw. Kontaktaufnahme mit einer entfernten Datenzentrale sofort anhand dieser in der Frankiermaschine vorhandenen ersten Kalibriergröße kalibriert werden.

Die Frankiermaschine kann schon bei Herstellung oder auch ihrer Auslieferung an den Kunden die ersten Kalibriergröße erhalten. Bevorzugt wird die erste Kalibriergröße in einem Übermittlungsschritt von einer entfernten Datenzentrale an die Frankiermaschine übermittelt, sodass die Frankiermaschine nicht schon zu den besagten Zeitpunkten, sondern erst bei Bedarf entsprechend ausgerüstet werden muss.

Der Übermittlungsschritt kann zu einem beliebigen Zeitpunkt erfolgen. Insbesondere kann er auch erst nach dem Erfassungsschritt erfolgen. Bevorzugt geht jedoch der Übermittlungsschritt dem Erfassungsschritt voran. Hiermit kann die Kalibrierung für den Standort der Frankiermaschine sofort nach Erfassen der Wiegeeinheit erfolgen, ohne dass eine nochmalige Kommunikation zur Übermittlung der ersten Kalibriergröße erforderlich wäre. Wie erwähnt, ist dies wegen der Zuordnung der ersten Kalibriergröße zur Frankiermaschine möglich.

Ist der Standort der Frankiermaschine mit ausreichender Genauigkeit bekannt, so kann es ausreichen, dass eine einzige erste Kalibriergröße in dem Übermittlungsschritt übermittelt wird. Bei anderen Varianten des erfindungsgemäßen Verfahrens kann aber auch vorgesehen sein, dass in dem Übermittlungsschritt eine die erste Kalibriergröße umfassende Mehrzahl von Kalibriergrößen an die Frankiermaschine übermittelt wird und die erste Kalibriergröße in einem Auswahlschritt aus dieser Mehrzahl von Kalibriergrößen ausgewählt wird. Diese Auswahl kann mittels beliebiger automatischer Abläufe erfolgen anhand derer die ausreichend exakte Position der Frankiermaschine und damit der Waage bestimmt werden kann.

Bevorzugt erfolgt die Auswahl der ersten Kalibriergröße unter Verwendung einer Eingabe eines Nutzers der Frankiermaschine. So kann beispielsweise vorgesehen sein, dass dem Nutzer zur Kalibrierung eine Anzahl von Standortbereichen an einer Ausgabeeinrichtung, wie einem Display etc., zur Auswahl angezeigt wird. Der Nutzer wählt dann durch eine entsprechende Eingabe denjenigen aus, in dem sich die Frankiermaschine befindet. Jedem Standortbereich ist dabei eine Kalibriergröße zugeordnet, sodass über die Auswahl des Standortbereichs dann auch eine Auswahl der ersten Kalibriergröße erfolgt.

Die Untergliederung der Standortbereiche kann beliebig fein gewählt sein. So können beispielsweise Staaten, Bundesstaaten, Postleitzahlenbereiche oder Telefonvorwahlbereiche etc. als Unterteilung vorgesehen sein. Die erforderliche Feinheit der Untergliederung richtet sich letztlich nur nach der zu erzielenden Genauigkeit der Messergebnisse der Wiegeeinheit und damit der tolerablen Fehler der Kalibrierung.

Die Zuordnung der ersten Kalibriergröße zur Frankiermaschine kann auf beliebige geeignete Weise erfolgen. Bevorzugt erfolgt sie über eine der Frankiermaschine zugeordnete Identifikation, die auch der ersten Kalibriergröße zugeordnet ist. Bevorzugt wird die erste Kalibriergröße dann unter Verwendung einer der Frankiermaschine zugeordneten Identifikation ermittelt. So kann in einer Datenzentrale beispielsweise anhand der Identifikation der Frankiermaschine, beispielsweise der Seriennummer der Frankiermaschine, die mit ausreichender Genauigkeit bekannte Position der Frankiermaschine und damit die zu dieser Position gehörige erste Kalibriergröße ermittelt werden.

Bei bevorzugten Varianten des erfindungsgemäßen Verfahrens handelt es sich bei der Identifikation der Frankiermaschine um eine einmalige und eindeutige Identifikation, mit der genau eine bestimmte Frankiermaschine identifiziert werden kann. Es versteht sich jedoch, dass in bestimmten anderen Fällen auch eine weniger präzise Identifikation der Frankiermaschine ausreichen kann. Sind für bestimmte Frankiermaschinen z. B. bereichsspezifische, beispielsweise länderspezifische, Varianten vorgesehen, kann gegebenenfalls auch eine Identifikation der Bereichszugehörigkeit, beispielsweise also die Kennung der Ländervariante, für die Zuordnung der geeigneten ersten Kalibriergröße zur jeweiligen Frankiermaschine ausreichen.

Die Übermittlung der ersten Kalibriergröße an die Frankiermaschine kann auf belibige geeignete Weise erfolgen. Bevorzugt wird die erste Kalibriergröße zusammen mit einer zur Berechnung von Frankierwerten vorgesehenen Portotabelle an die Frankiermaschine übermittelt. Dies hat den Vorteil, dass diese Portotabelle in der Regel ohnehin an die Frankiermaschine übermittelt werden muss, um die Berechnung von Frankierwerten zu ermöglichen, sodass eine weitere gesonderte Übermittlung zur Übermittlung der ersten Kalibriergröße nicht erforderlich ist. Besonders einfach gestaltet sich die Übermittlung, wenn die erste Kalibriergröße eingebunden in die Portotabelle übermittelt wird.

Da derartige Portotabellen auch regelmäßig ausgetauscht werden, ist es zudem möglich, zu bestimmten Zeitpunkten in einfacher Weise eine Aktualisierung der Kalibrierung mit veränderten Kalibriergrößen vorzunehmen, sofern dies erforderlich ist. Insbesondere kann hierdurch in einfacher Weise eine genauere Positionsbestimmung einfließen. Ebenso kann ein Ortswechsel der Frankiermaschine, beispielsweise im Rahmen eines Umzugs oder dergleichen Berücksichtigung finden.

Die Einbindung der ersten Kalibriergröße in die Portotabelle kann auf beliebige geeignete Weise erfolgen. Bevorzugt umfasst die Portotabelle eine Kalibriertabelle, die wiederum wenigstens die erste Kalibriergröße umfasst.

Bei der ersten Kalibriergröße kann es sich um eine beliebige geeignete Größe handeln, welche dazu verwendet werden kann, die Messsignale der vorkalibrierten Wiegeeinheit in für den Standort der Frankiermaschine kalibrierte Messsignale umzuwandeln. Bei bevorzugten Varianten des erfindungsgemäßen Verfahrens ist vorgesehen, dass die erste Kalibriergröße eine Gravitationskonstante ist, anhand derer eine Umrechnung der durch die Messsignale der Wiegeeinheit repräsentierten Messwerte in Massewerte erfolgt. Alternativ kann es sich bei der ersten Kalibriergröße auch um einen ein Korrekturfaktor für eine Gravitationskonstante handeln, mit der eine entsprechende Umrechnung erfolgt.

Die Kalibrierung der Wiegeeinheit kann auf beliebige geeignete Weise erfolgen. Hierbei ist es im Sinne der vorliegenden Erfindung insbesondere nicht erforderlich, dass die für den Standort der Frankiermaschine korrekten Messergebnisse unmittelbar von der Wiegeeinheit ausgegeben werden. Eine der Kalibrierung entsprechende Umrechnung kann beispielsweise auch in der Frankiermaschine erfolgen.

Bei bevorzugten Varianten des erfindungsgemäßen Verfahrens ist daher vorgesehen, dass die Kalibrierung der Wiegeeinheit dadurch erfolgt, dass die Wiegeeinheit für den Vorkalibrierort kalibrierte erste Messsignale an die erste Verarbeitungseinrichtung liefert und die erste Verarbeitungseinrichtung die von der Wiegeeinheit empfangenen ersten Messsignale unter Verwendung der ersten Kalibriergröße in für den Standort der Frankiermaschine kalibrierte zweite Messsignale umrechnet. Alternativ kann aber auch vorgesehen sein, dass die Wiegeeinheit die für den Vorkalibrierort kalibrierten ersten Messsignale unter Verwendung der ersten Kalibriergröße in für den Standort der Frankiermaschine kalibrierte zweite Messsignale unmittelbar umrechnet.

Wie bereits oben erwähnt, kann vorgesehen sein, dass die Kalibrierung wiederholt wird. Vorzugsweise wird der Kalibrierschritt zur Aktualisierung der Kalibrierung ausgelöst durch wenigstens ein vorgebbares Ereignis wenigstens einmal wiederholt. Bei einem solchen vorgebbaren Ereignis kann es sich um ein beliebiges zeitliches oder nicht-zeitliches Ereignis handeln. So kann beispielsweise vorgesehen sein, dass es sich bei dem Ereignis um das Erreichen bestimmter vorgebbarer Zeitpunkte handelt. Ebenso kann es sich bei dem Ereignis um das Eintreten eines bestimmten vorgebbaren Betriebszustands der Frankiermaschine oder der Wiegeeinheit handeln. So kann die Kalibrierung beispielsweise bei jedem n-ten Einschalten (mit n = 1, 2, 3 usw.) der Frankiermaschine und/oder der Wiegeeinheit wiederholt werden. Schließlich kann das Ereignis natürlich auch eine bestimmte Eingabe eines Nutzers oder von einer entfernten Datenzentrale sein.

Die vorliegende Erfindung betrifft weiterhin eine Frankieranordnung mit einer Frankiermaschine und einer mit der Frankiermaschine verbindbaren Wiegeeinheit, wobei die Frankiermaschine eine erste Verarbeitungseinrichtung aufweist, mit der die Wiegeeinheit verbindbar ist. Erfindungsgemäß ist die Wiegeeinheit zum Zeitpunkt der Verbindung mit der ersten Verarbeitungseinrichtung für einen Vorkalibrierort vorkalibriert. Die erste Verarbeitungseinrichtung ist zum Erfassen der Verbindung der Wiegeeinheit mit der ersten Verarbeitungseinrichtung ausgebildet. Die erste Verarbeitungseinrichtung und/oder die Wiegeeinheit ist weiterhin zum Kalibrieren der Wiegeeinheit für den Standort der Frankiermaschine unter Verwendung einer der Frankiermaschine zugeordneten ersten Kalibriergröße ausgebildet.

Mit dieser Frankieranordnung lassen sich die oben beschriebenen Vorteile und Varianten des erfindungsgemäßen Verfahrens in gleichem Maße realisieren, sodass diesbezüglich auf die obigen Ausführungen Bezug genommen wird.

Vorzugsweise weist die Frankiermaschine einen mit der ersten Verarbeitungseinrichtung verbundenen ersten Speicher auf, in dem die erste Kalibriergröße gespeichert ist. Bei vorteilhaften Varianten der erfindungsgemäßen Frankieranordnung mit der beschrienen Auswahlmöglichkeit der ersten Kalibriergröße ist in dem ersten Speicher dann eine die erste Kalibriergröße umfassende Mehrzahl von Kalibriergrößen gespeichert. Die erste Verarbeitungseinrichtung ist dann zur Auswahl der ersten Kalibriergröße aus dieser Mehrzahl von Kalibriergrößen ausgebildet. Bevorzugt ist die erste Verarbeitungseinrichtung dabei zur Auswahl der ersten Kalibriergröße unter Verwendung einer Eingabeinformation eines Nutzers der Frankiermaschine ausgebildet.

Bei vorteilhaften Ausgestaltungen der erfindungsgemäßen Frankieranordnung ist eine entfernte Datenzentrale vorgesehen, die über eine Telekommunikationsverbindung mit der Frankiermaschine verbindbar ist und die zum Übermitteln der ersten Kalibriergröße an die Frankiermaschine ausgebildet ist. Hierdurch lässt sich die Kalibrierung der Frankiermaschinen in besonders einfacher Weise zentral steuern. Bevorzugt ist die Datenzentrale dabei zur Ermittlung der ersten Kalibriergröße unter Verwendung einer der Frankiermaschine zugeordneten Identifikation ausgebildet.

Weiterhin ist vorzugsweise vorgesehen, dass die Datenzentrale zur oben beschriebenen Übermittlung der ersten Kalibriergröße zusammen mit einer zur Berechnung von Frankierwerten vorgesehenen Portotabelle an die Frankiermaschine ausgebildet ist. Bevorzugt ist wiederum die Datenzentrale zur Übermittlung der ersten Kalibriergröße eingebunden in die Portotabelle ausgebildet.

Die Portotabelle ist weiterhin vorzugsweise zusammen mit der ersten Kalibriergröße in dem ersten Speicher gespeichert. Hierzu umfasst die Portotabelle bevorzugt eine Kalibriertabelle, die wenigstens die erste Kalibriergröße umfasst.

Um die oben beschriebene Kalibrierung zu realisieren, kann die Wiegeeinheit zur Ausgabe von für den Vorkalibrierort kalibrierten erste Messsignalen an die erste Verarbeitungseinrichtung ausgebildet sein und die erste Verarbeitungseinrichtung zur Umrechnung der ersten Messsignale unter Verwendung der ersten Kalibriergröße in für den Standort der Frankiermaschine kalibrierte zweite Messsignale ausgebildet sein. Alternativ kann die erste Verarbeitungseinrichtung zur Weitergabe der ersten Kalibriergröße an die Wiegeeinheit ausgebildet sein und die Wiegeeinheit zur Umrechnung der für den Vorkalibrierort kalibrierten ersten Messsignale unter Verwendung der ersten Kalibriergröße in für den Standort der Frankiermaschine kalibrierte zweite Messsignale ausgebildet sein.

Um die beschriebene zumindest einmalige Wiederholung der Kalibrierung zu realisieren, kann die erste Verarbeitungseinrichtung und/oder die Wiegeeinheit zur wenigstens einmaligen, durch wenigstens ein vorgebbares Ereignis ausgelösten Wiederholung der Kalibrierung der Wiegeeinheit für den Standort der Frankiermaschine ausgebildet sein.

Die vorliegende Erfindung betrifft weiterhin eine Frankiermaschine für eine erfindungsgemäße Frankieranordnung, welche die oben im Zusammenhang mit der erfindungsgemäßen Frankieranordnung beschriebenen Merkmale der Frankiermaschine aufweist. Sie betrifft weiterhin eine Wiegeeinheit für eine erfindungsgemäße Frankieranordnung, welche die oben im Zusammenhang mit der erfindungsgemäßen Frankieranordnung beschriebenen Merkmale der Wiegeeinheit aufweist.

Weitere bevorzugte Ausgestaltungen der Erfindung ergeben sich aus den Unteransprüchen bzw. der nachstehenden Beschreibung eines bevorzugten Ausführungsbeispiels, welche auf die beigefügten Zeichnungen Bezug nimmt. Es zeigen

Figur 1    eine schematische Darstellung einer bevorzugten Ausführungsform der erfindungsgemäßen Frankieranordnung, bei der das erfindungsgemäße Verfahren durchgeführt werden kann;

Figur 2    ein Ablaufdiagramm einer bevorzugten Ausführungsform des erfindungsgemäßen Verfahrens zum Ausrüsten einer Frankiermaschine mit einer Wiegeeinheit, das bei der Frankieranordnung aus Figur 1 durchgeführt werden kann;

Figur 3    eine Ablaufdiagramm einer weiteren bevorzugten Ausführungsform des erfindungsgemäßen Verfahrens zum Ausrüsten einer Frankiermaschine mit einer Wiegeeinheit, das bei der Frankieranordnung aus Figur 1 durchgeführt werden kann.

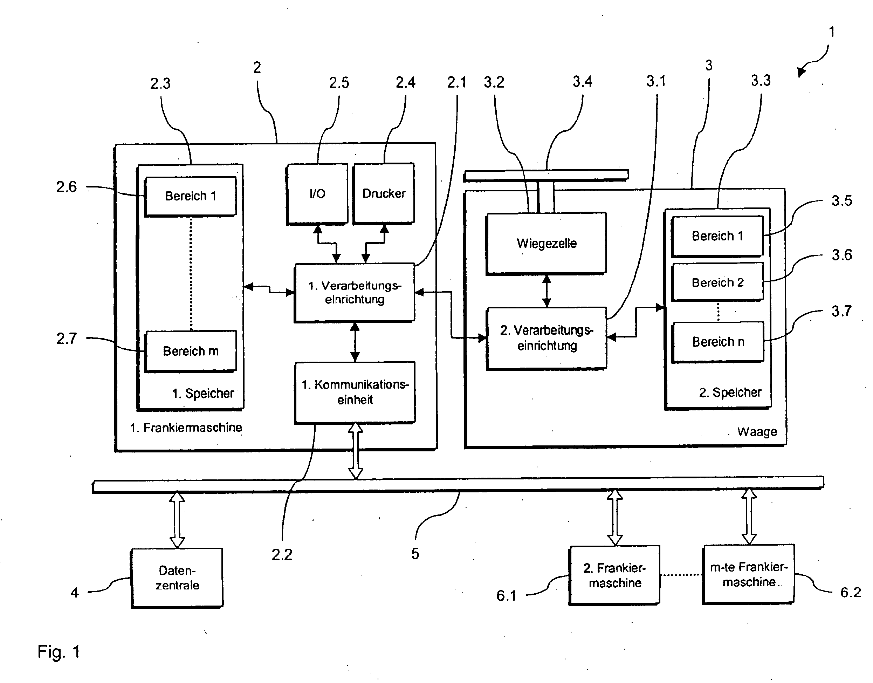

Figur 1 zeigt eine schematische Darstellung einer bevorzugten Ausführungsform der erfindungsgemäßen Frankieranordnung 1, bei der das erfindungsgemäße Verfahren durchgeführt werden kann.

Die Frankieranordnung 1 umfasst eine Frankiermaschine 2 mit einer ersten Verarbeitungseinrichtung 2.1 sowie einer Kommunikationseinheit in Form eines Modems 2.2, einem ersten Speicher 2.3, einer Druckeinrichtung in Form eines Druckers 2.4 und einer Eingabe- und Ausgabeeinrichtung 2.5, die alle mit der ersten Verarbeitungseinrichtung 2.1 verbunden sind.

Weiterhin umfasst die Frankieranordnung 1 eine Wiegeeinheit in Form einer Waage 3. Diese Waage 3 umfasst eine zweite Verarbeitungseinrichtung 3.1 sowie eine Wiegezelle 3.2 und einen zweiten Speicher 3.3, die jeweils mit der zweiten Verarbeitungseinrichtung 3.1 verbunden sind. Die Wiegezelle 3.2 ist mit einer Plattform 3.4 verbunden, auf der Poststücke zum Wiegen abgelegt werden können.

Schließlich umfasst die Frankieranordnung 1 eine entfernte Datenzentrale 4, die über ein Telekommunikationsnetz 5 mit dem Modem 2.2 der Frankiermaschine 2 verbunden werden kann. Die Datenzentrale 4 kann über das Telekommunikationsnetz 5 mit weiteren Frankiermaschinen 6.1, 6.2 verbunden werden, die zumindest zum Teil wie die Frankiermaschine 2 aufgebaut sind.

Die Frankiermaschine 2 wird von einem Nutzer dazu verwendet, mittels des Druckers 2.4 Poststücke, wie Briefe, Pakete etc., mit Frankierabdrucken zu versehen, die von einem Postbeförderer akzeptiert werden. Hierzu muss unter anderem der korrekte Portowert ermittelt werden, der für das betreffende Poststück zu verwenden ist. Dieser hängt neben anderen Parametern, wie Größe, Versandart, Versandort etc., von der - häufig auch als Gewicht bezeichneten - Masse des Poststücks ab. Dabei sind in der Regel unterschiedliche Masseklassen — häufig auch als Gewichtsklassen bezeichnet - vorgesehen, die unterschiedliche Portowerte nach sich ziehen.

Der Nutzer kann die Masse- bzw. Gewichtsklasse des jeweiligen Poststücks auf beliebige Weise ermitteln und diese bei der Frankierung über die Eingabe- und Ausgabeeinrichtung 2.5, beispielsweise eine Schnittstelleneinrichtung mit Tastatur und Display, in die Frankiermaschine 2 eingeben. Die erste Verarbeitungseinrichtung 2.1 ermittelt dann aus den Parametern des Poststücks den korrekten Portowert und steuert den Drucker zum Erzeugen des Frankierabdrucks entsprechend an. Bei der Ermittlung des Portowerts wird eine so genannte Portotabelle des betreffenden Postbeförderers verwendet, aus der unter anderem anhand der gewählten Masse- bzw. Gewichtsklasse der korrekte Portowert entnommen werden kann.

Um die Generierung des Frankierabdrucks zu vereinfachen, kann die Frankiermaschine 2 nach ihrer Auslieferung an einen Kunden vor Ort beim Kunden mit der Waage 3 aus- bzw. nachgerüstet werden, indem die Waage 3 mit der Frankiermaschine 2 verbunden wird. Die Waage 3 liefert einen für das Gewicht bzw. die Masse des aufgelegten Poststücks repräsentativen Messwert an die erste Verarbeitungseinrichtung 2.1. Anhand dieses Messwerts kann die erste Verarbeitungseinrichtung 2.1 dann automatisch die Einstufung des Poststücks in die entsprechende Gewichtsklasse vornehmen, ohne dass hierfür eine Eingabe des Nutzers der Frankiermaschine 2 erforderlich ist.

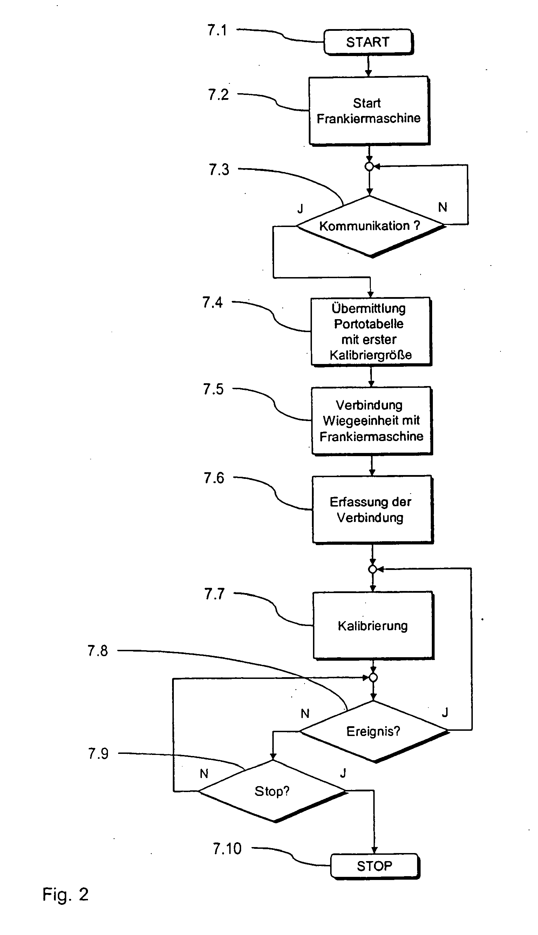

Im Folgenden wird unter Bezugnahme auf die Figuren 1 und 2 eine bevorzugte Ausführungsform des erfindungsgemäßen Verfahrens zum Ausrüsten einer Frankiermaschine mit einer Wiegeeinheit, das bei der Frankieranordnung 1 durchgeführt werden kann, beschrieben.

Zunächst wird der Verfahrensablauf in einem Schritt 7.1 gestartet. In einem Schritt 7.2 wird die Frankiermaschine 2 gestartet und durchläuft eine Initialisierungsroutine, auf die hier nicht näher eingegangen werden soll. Nach der Initialisierungsroutine versucht die Frankiermaschine 2 über ihr Modem 2.2 eine Verbindung mit der Datenzentrale 4 herzustellen. Dies kann gegebenenfalls auch erst zu einem späteren Zeitpunkt nach dem Einschalten der Frankiermaschine durch einen entsprechenden automatischen oder durch den Nutzer initiierten Funktionsaufruf erfolgen. In Schritt 7.3 überprüft die erste Verarbeitungseinrichtung 2.1, ob erfolgreich eine Verbindung mit der Datenzentrale 4 aufgebaut wurde.

Ist dies der Fall, wird in einem Übermittlungsschritt von der Datenzentrale 4 an die Frankiermaschine 2 neben anderen Daten eine Portotabelle übermittelt, die in einem ersten Bereich 2.6 des ersten Speichers 2.3 gespeichert wird. Diese Portotabelle umfasst neben den Zuordnungsbereichen für den Portowert unter anderem auch eine Kalibriertabelle. Diese Kalibriertabelle enthält wenigstens eine erste Kalibriergröße, die, wie im Folgenden noch näher erläutert wird, zum späteren Kalibrieren der Waage 3 verwendet wird.

Die Portotabelle mit der Kalibriertabelle wird von der Datenzentrale 4 anhand einer im Rahmen der Kommunikation von der Frankiermaschine 2 übermittelten Identifikation der Frankiermaschine 2 ausgewählt. Die Portotabelle ist hierzu in einer Datenbank der Datenzentrale 4 mit dieser Identifikation der Frankiermaschine 2 verknüpft, sodass die betreffende Portotabelle, die Kalibriertabelle und damit auch die darin enthaltenen Kalibriergrößen der Frankiermaschine 2 zugeordnet sind.

Diese Zuordnung der Kalibriergrößen zu der Frankiermaschine 2 und nicht zu einer bestimmten Waage ermöglicht es, die Kalibriergrößen schon vor dem Anschluss einer Waage an die Frankiermaschine 2 zu übermitteln. Weiterhin ist es hiermit nicht nötig, eine solche Zuordnung für die Waagen vorzunehmen. Der Herstellungsaufwand für die Waagen vereinfacht sich hierdurch erheblich, da sie unabhängig von ihrem späteren Einsatzort nur für den Vorkalibrierort kalibriert werden müssen und keine speziellen Vorkehrungen für ihre spätere Identifizierung und Lokalisierung zur Kalibrierung getroffen werden müssen. Zwar muss für die Frankiermaschine eine Zuordnung der Kalibriergrößen vorgenommen werden. Dies gestaltet sich jedoch sehr einfach und erhöht den Aufwand jedoch nicht sonderlich, da für die Frankiermaschine ohnehin aus anderen Gründen eine ausreichend präzise Lokalisierung erforderlich ist. Insgesamt wird somit eine deutliche Reduzierung des Aufwands für die Kalibrierung erzielt.

Sobald die Portotabelle erfolgreich in die Frankiermaschine 2 geladen wurde, kann diese zum Frankieren verwendet werden. Es versteht sich hierbei, dass bei anderen Varianten der vorliegenden Erfindung auch vorgesehen sein kann, dass die Frankiermaschine bereits mit einer entsprechenden Portotabelle ausgeliefert wird. Der Übermittlungsschritt kann dann entfallen.

Die Frankiermaschine 2 kann zunächst ohne die Waage 3 an den Kunden ausgeliefert bzw. von dem Kunden für eine bestimmte Zeit auch ohne die Waage 3 betrieben werden. In diesem Fall muss der Nutzer die Masse- bzw. Gewichtsklasse des jeweiligen Poststücks, wie oben beschrieben, auswählen bzw. in die Frankiermaschine 2 eingeben. Ebenso kann die Waage 3 aber noch vor einer ersten Frankierung an die Frankiermaschine 2 angeschlossen werden.

In einem Verbindungsschritt 7.4 wird die Waage 3 an die Frankiermaschine 2 angeschlossen, sodass die erste Verarbeitungseinrichtung 2.1 und die zweite Verarbeitungseinrichtung 3.2 über - nicht näher dargestellte - Schnittstellen miteinander verbunden sind.

In einem Erfassungsschritt 7.5 erfasst die erste Verarbeitungseinrichtung 2.1 dann, dass die Waage 3 an die Frankiermaschine 2 angeschlossen wurde. Hierzu kann die erste Verarbeitungseinrichtung 2.1 beispielsweise in regelmäßigen Abständen die Schnittstelle zur Waage 3 ansprechen und überprüfen, ob an dieser ein entsprechendes Signal anliegt, das anzeigt, dass die Waage 3 angeschlossen wurde.

Die Waage 3 ist im Auslieferungszustand für einen Vorkalibrierort, beispielsweise ihren Herstellungsort, vorkalibriert. Das bedeutet, dass die zweite Verarbeitungseinrichtung 3.1 an diesem Vorkalibrierort ein Signal an ihre Schnittstelle zur Frankiermaschine 2 ausgibt, welches für das an diesem Vorkalibrierort korrekte Gewicht des auf die Plattform aufgelegten Poststücks repräsentativ ist. Dieses Signal wird von der zweiten Verarbeitungseinrichtung aus den von der Wiegezelle 3.2 gelieferten Messsignalen anhand von Vorkalibrierdaten ermittelt. Diese Vorkalibrierdaten wurden im Rahmen der Vorkalibrierung ermittelt und in einem ersten Bereich 3.5 des zweiten Speichers 3.3 gespeichert.

Die zweite Verarbeitungseinrichtung 3.1 berechnet die Masse $m_V$ eines auf die Plattform aufgelegten Poststücks am Vorkalibrierort dabei nach folgender Gleichung:

$$m_V = m_K \cdot \left( \frac{s - s_0}{s_K - s_0} \right), \qquad (1)$$

wobei:

$m_K$ :    Kalibriermasse, mit der die Waage kalibriert wurde;
s      : Ausgangssignal der Wiegezelle bei aufliegender Masse $m_V$;
$s_o$ :    Ausgangssignal der Wiegezelle am Nullpunkt, d.h. ohne aufliegende Masse;
$s_K$ :    Ausgangssignal der Wiegezelle am Endpunkt, d.h. bei aufliegender Kalibriermasse.

Die Größen $m_K$ (Kalibriermasse), $s_o$ (Ausgangssignal der Wiegezelle am Nullpunkt) und $s_K$ (Ausgangssignal der Wiegezelle am Endpunkt) stellen unter anderem Vorkalibrierdaten dar und sind daher in dem ersten Bereich 3.5 des zweiten Speichers 3.3 der Waage 3 gespeichert.

Weitere Vorkalibrierdaten, die ebenfalls in dem ersten Bereich 3.5 des zweiten Speichers 3.3 gespeichert sind, sind das Datum und die Nummer der Kalibrierung sowie der Wert der Gravitationskonstante $g_v$ am Vorkalibrierort.

Schließlich werden in dem ersten Speicher noch weitere Daten zur Waage 3 gespeichert. Zu diesen können unter anderem eine Kennung des Herstellers der Waage, das Herstelldatum der Waage, eine Identifikation der Waage, beispielsweise eine Seriennummer, eine Typ- bzw. Versionsinformation der Waage etc. gehören.

In einem Kalibrierschritt 7.6 erfolgt dann eine Kalibrierung der Waage für den Standort der Frankiermaschine 2. Hierzu wird von der ersten Verarbeitungseinrichtung 2.1 aus der in dem ersten Bereich 2.6 des ersten Speichers 2.3 gespeicherten Kalibriertabelle eine erste Kalibriergröße entnommen und an die zweite Verarbeitungseinrichtung 3.1 übermittelt, welche diese dann in einem zweiten Bereich 3.6 des zweiten Speichers 3.3 ablegt.

Diese erste Kalibriergröße ist im vorliegenden Fall die Gravitationskonstante $g_{FM}$ am Standort der Frankiermaschine 2. Mittels dieser Gravitationskonstante $g_{FM}$ für den Standort der Frankiermaschine 2 kann die zweite Verarbeitungseinrichtung 3.1 dann aus den Signalen der Wiegezelle und aus den in dem ersten Bereich 3.5 des zweiten Speichers 3.3 gespeicherten Vorkalibrierdaten die korrekte Masse $m_{FM}$ eines am Standort der Frankiermaschine 2 auf die Plattform 3.4 aufgelegten Poststücks berechnen.

Mit anderen Worten erfolgt die Kalibrierung, indem die zweite Verarbeitungseinrichtung 3.1 die für den Vorkalibrierort kalibrierten ersten Messsignale der Wiegezelle 3.2 unter Verwendung der ersten Kalibriergröße in für den Standort der Frankiermaschine kalibrierte zweite Messsignale umrechnet. Diese werden dann an die erste Verarbeitungseinrichtung 2.1 weitergegeben zur Verwendung bei der Bestimmung des Portowerts anhand der Portotabelle weitergegeben.

Es versteht sich hierbei jedoch, dass bei anderen Varianten der vorliegenden Erfindung auch vorgesehen sein kann, dass die Kalibrierung erfolgt, indem die zweite Verarbeitungseinrichtung 3.1 die für den Vorkalibrierort kalibrierten erste Messsignale an die erste Verarbeitungseinrichtung 2.1 liefert und die erste Verarbeitungseinrichtung 2.1 diese ersten Messsignale dann unter Verwendung der ersten Kalibriergröße in für den Standort der Frankiermaschine kalibrierte zweite Messsignale umrechnet.

Es versteht sich hierbei weiterhin, dass auch vorgesehen sein kann, dass die zweite Verarbeitungseinrichtung lediglich ein Analog-Digital-Wandler ist, der die digitalisierten Signale der Wiegezelle und die Vorkalibrierdaten aus dem zweiten Speicher an die erste Verarbeitungseinrichtung weitergibt. Die erste Verarbeitungseinrichtung nimmt dann anhand dieser Daten sämtliche zu Ermittlung des korrekten Massewertes $m_{FM}$ erforderlichen Berechnungen vor.

Schließlich versteht es sich, dass bei anderen Varianten der vorliegenden Erfindung auch vorgesehen sein kann, dass anstelle einer Gravitationskonstante für den Standort der Frankiermaschine auch lediglich ein für den Standort der Frankiermaschine ermittelter entsprechender Korrekturfaktor der Gravitationskonstante am Vorkalibrierort vorgesehen sein kann. Ebenso kann natürlich auch eine beliebige andere Größe verwendet werfen, welche die Ermittlung korrekter Massewerte für den Standort der Frankiermaschine erlaubt.

Gemäß der vorliegenden Erfindung kann vorgesehen sein, dass die Kalibriertabelle eine oder mehrere Kalibriergrößen umfasst. Ist nur eine Kalibriergröße vorgesehen, wird diese in dem Kalibrierschritt 7.7 als erste Kalibriergröße ohne weiteres in der oben beschriebenen Weise in die Waage 3 geladen.

Sind jedoch mehrere Kalibriergrößen in der Kalibriertabelle enthalten, erfolgt in einem Auswahlschritt des Kalibrierschritts 7.7 eine Auswahl der ersten Kalibriergröße. Hierzu kann der Nutzer über das Display der Eingabe- und Ausgabeeinrichtung 2.5 aufgefordert werden, eine passende für den Standort der Frankiermaschine 2 passende Kalibriergröße als erste Kalibriergröße auszuwählen. Hierzu kann er beispielsweise aufgefordert werden, eine Information über den Standort der Frankiermaschine einzugeben. Dies kann beispielsweise eine Angabe eines Staates, eines Bundeslandes oder eines Postleitzahlen- oder Ortsvorwahlbereichs etc. sein. Anhand dieser Eingabe kann die erste Verarbeitungseinrichtung 2.1 dann die korrekte erste Kalibriergröße ermitteln und an die Waage 3 übermitteln.

In einem Schritt 7.8 nach der Kalibrierung nimmt die erste Verarbeitungseinrichtung 2.1 eine Überprüfung vor, ob ein bestimmtes vorgegebenes Ereignis eingetreten ist, bei dessen Eintritt eine Wiederholung der Kalibrierung durchzuführen ist.

Wie bereits oben erwähnt, kann es sich bei einem solchen vorgebbaren Ereignis um ein beliebiges zeitliches oder nicht-zeitliches Ereignis handeln. So kann beispielsweise vorgesehen sein, dass es sich bei dem Ereignis um das Erreichen bestimmter vorgebbarer Zeitpunkte handelt. Ebenso kann es sich bei dem Ereignis um das Eintreten eines bestimmten vorgebbaren Betriebszustands der Frankiermaschine 2 oder der Waage 3 handeln. So kann die Kalibrierung beispielsweise bei jedem Einschalten der Frankiermaschine 2 und/oder der Waage wiederholt werden. Schließlich kann das Ereignis natürlich auch eine bestimmte Eingabe eines Nutzers oder von einer entfernten Datenzentrale sein.

Insbesondere kann das Ereignis die Übermittlung einer neuen Portotabelle durch die Datenzentrale 4 sein. Ist dies der Fall, wird der Kalibrierschritt 7.7 mit der neuen ersten Kalibriergröße aus der neuen Portotabelle wiederholt. Hiermit kann eine einfache und permanente Aktualisierung der Kalibrierung erzielt werden.

In dem zweiten Bereich 3.6 des zweiten Speichers werden zur Dokumentierung der jeweiligen Kalibrierung neben der von der Frankiermaschine 2 empfangenen Gravitationskonstante $g_{FM}$ unter anderem eine laufende Nummer der Kalibrierung, das Datum der Kalibrierung, das Ausgangssignal der Wiegezelle am Nullpunkt und das Ausgangssignal der Wiegezelle am Endpunkt gespeichert.

Der zweite Speicher 3.3 weist insgesamt n Bereiche 3.5 bis 3.7 auf, in denen jeweils eine Kalibrierung durch entsprechend abgelegte Daten protokolliert ist. Die zweite Verarbeitungseinrichtung 3.1 greift zur Ermittlung der Masse $m_{FM}$ eines am Standort der Frankiermaschine 2 auf die Plattform 3.4 aufgelegten Poststücks jeweils auf die Daten der zuletzt protokollierten Kalibrierung zu.

Analog hierzu weist der erste Speicher 2.3 insgesamt m Bereiche 2.6 bis 2.7 auf, in denen unter anderem die Übersendung der Portotabellen durch entsprechend abgelegte Daten protokolliert ist.

In einem Schritt 7.9 wird schließlich überprüft, ob der Verfahrensablauf beendet werden soll. Ist dies der Fall, endet der Verfahrensablauf in einem Schritt 7.10. Andernfalls wird zu dem Schritt 7.8 zurück gesprungen.

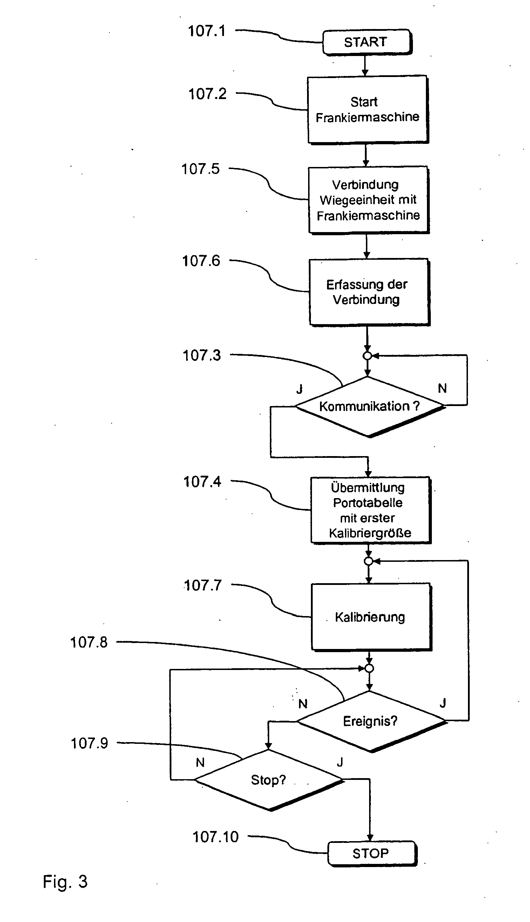

Im Folgenden wird unter Bezugnahme auf die Figuren 1 und 3 eine weitere bevorzugte Ausführungsform des erfindungsgemäßen Verfahrens zum Ausrüsten einer Frankiermaschine mit einer Wiegeeinheit, das bei der Frankieranordnung 1 durchgeführt werden kann, beschrieben.

Dieses Verfahren entspricht in Aufbau und Funktion weitgehend demjenigen aus Figur 2, sodass hier lediglich auf die Unterschiede eingegangen werden soll. Zu der Ausführung aus Figur 2 identische oder zumindest gleichartige Komponenten sind daher in Figur 3 mit lediglich um den Wert 100 erhöhten Bezugszeichen versehen. Zu diesen Komponenten wird auf die entsprechenden obigen Ausführungen verwiesen.

Der Unterschied zu der Ausführung aus Figur 2 besteht darin, dass der Ablauf der Schritte verändert ist. So erfolgt nach dem Einschalten der Frankiermaschine 2 in dem Schritt 107.2 zunächst der Verbindungsschritt 107.5, hinsichtlich dessen Inhalt auf die obigen Ausführungen zu dem Verbindungsschritt 7.5 verwiesen wird.

Danach erfolgt der Erfassungsschritt 107. 6, hinsichtlich dessen Inhalt auf die obigen Ausführungen zu dem Verbindungsschritt 7.6 verwiesen wird. Ausgelöst durch die Erfassung der Verbindung der Waage 3 mit der Frankiermaschine 2 wird versucht, über das Modem 2.2 eine Kommunikation mit der Datenzentrale 2 aufzubauen. Wird in dem Schritt 107.3 eine erfolgreiche Herstellung der Verbindung zur Datenzentrale 4 erfasst, erfolgt jetzt der Übermittlungsschritt 107.4, in dem die Portotabelle mit der eingebetteten ersten Kalibriergröße übermittelt wird. Hinsichtlich des weiteren Inhalts des Übermittlungsschritt 107.4 wird auf die obigen Ausführungen zu dem Übermittlungsschritt 7.4 verwiesen.

Diese Variante hat den Vorteil, dass die Übermittlung der ersten Kalibriergröße erst erfolgt, wenn die Waage 3 tatsächlich an die Frankiermaschine 2 angeschlossen wird. Dabei kann vorgesehen sein, dass die Frankiermaschine 2 zuvor schon betrieben wurde, in diesem Fall aber noch Portotabellen ohne die erste Kalibriergröße verwendet wurden. So kann vorgesehen sein, dass die Einbindung der ersten Kalibriergröße in der Datenzentrale 4 erst dann erfolgt, wenn die Kommunikation in Reaktion auf das Anschließen der Waage 3 erfolgt.

Schließlich erfolgt dann der Kalibrierschritt 107.7, hinsichtlich dessen Inhalt wiederum auf die obigen Ausführungen zu dem Kalibrierschritt 7.7 verwiesen wird. Im Weiteren entspricht der Ablauf dann wieder dem Ablauf der Variante aus Figur 2.

Bei den vorstehend beschriebenen Speichern kann es sich um beliebige, nichtflüchtige Speicher handeln. Insbesondere für den zweiten Speicher 3.3 können beispielsweise ein oder mehrere EEPROMs zum Einsatz kommen. Weiterhin werden einzelne Daten, bevorzugt aber alle Daten abgesichert gespeichert. Dies kann in beliebiger bekannter Weise erfolgen, beispielsweise durch eine Prüfsumme oder dergleichen.

**Patentansprüche**

1. Verfahren zum Ausrüsten, insbesondere Nachrüsten, einer Frankiermaschine (2) mit einer Wiegeeinheit (3), bei dem in einem Verbindungsschritt (7.5; 107.5) die Wiegeeinheit (3) mit einer ersten Verarbeitungseinrichtung (2.1) der Frankiermaschine (2) verbunden wird, wobei

   - in dem Verbindungsschritt (7.5; 107.5) eine für einen Vorkalibrierort kalibrierte Wiegeeinheit (3) mit der ersten Verarbeitungseinrichtung (2.1) verbunden wird,
   - in einem Erfassungsschritt (7.6; 107.6), der dem Verbindungsschritt (7.5; 107.5) nachfolgt, die Verbindung der Wiegeeinheit (3) mit der ersten Verarbeitungseinrichtung (2.1) erfasst wird und
   - in einem Kalibrierschritt (7.7; 107.7), der dem Erfassungsschritt (7.6; 107.6) nachfolgt; unter Verwendung einer der Frankiermaschine (2) zugeordneten ersten Kalibriergröße eine Kalibrierung der Wiegeeinheit (3) für den Standort der Frankiermaschine (2) erfolgt,

   **dadurch gekennzeichnet, dass**

   - die erste Kalibriergröße in einem Übermittlungsschritt (7.4; 107.4) eingebunden in eine zur Berechnung von Frankierwerten vorgesehene Portotabelle an die Frankiermaschine (2) übermittelt wird.

2. Verfahren nach Anspruch 1, **dadurch gekennzeichnet, dass** die Portotabelle eine Kalibriertabelle umfasst, die wenigstens die erste Kalibriergröße umfasst.

3. Verfahren nach Anspruch 1 oder 2, **dadurch gekennzeichnet, dass** die erste Kalibriergröße in einem Übermittlungsschritt (7.4; 107.4) von einer entfernten Datenzentrale (4) an die Frankiermaschine (2) übermittelt wird.

4. Verfahren nach Anspruch 3, **dadurch gekennzeichnet, dass** der Übermittlungsschritt (7.4) dem Erfassungsschritt (7.6) vorangeht.

5. Verfahren nach Anspruch 3 oder 4, **dadurch gekennzeichnet, dass** in dem Übermittlungsschritt (7.4; 107.4) eine die erste Kalibriergröße umfassende Mehrzahl von Kalibriergrößen an die Frankiermaschine (2) übermittelt wird und die erste Kalibriergröße in einem Auswahlschritt aus dieser Mehrzahl von Kalibriergrößen ausgewählt wird.

6. Verfahren nach Anspruch 5, **dadurch gekennzeichnet, dass** die Auswahl der ersten Kalibriergröße unter Verwendung einer Eingabe eines Nutzers der Frankiermaschine (2) erfolgt.

7. Verfahren nach einem der vorhergehenden Ansprüche, **dadurch gekennzeichnet, dass** die erste Kalibriergröße unter Verwendung einer der Frankiermaschine (2) zugeordneten Identifikation ermittelt wird.

8. Verfahren nach einem der vorhergehenden Ansprüche, **dadurch gekennzeichnet, dass** die erste Kalibriergröße eine Gravitationskonstante oder ein Korrekturfaktor für eine Gravitationskonstante ist.

9. Verfahren nach einem der vorhergehenden Ansprüche, **dadurch gekennzeichnet, dass** die Kalibrierung der Wiegeeinheit (3) dadurch erfolgt**, dass**

   - die Wiegeeinheit (3) für den Vorkalibrierort kalibrierte erste Messsignale an die erste Verarbeitungseinrichtung (2.1) liefert und die erste Verarbeitungseinrichtung (2.1) die von der Wiegeeinheit (3) empfangenen ersten Messsignale unter Verwendung der ersten Kalibriergröße in für den Standort der Frankiermaschine (2) kalibrierte zweite Messsignale umrechnet

oder

- Wiegeeinheit (3) die für den Vorkalibrierort kalibrierten ersten Messsignale unter Verwendung der ersten Kalibriergröße in für den Standort der Frankiermaschine (2) kalibrierte zweite Messsignale umrechnet.

10. Verfahren nach einem der vorhergehenden Ansprüche, **dadurch gekennzeichnet, dass** der Kalibrierschritt (7.7; 107.7) zur Aktualisierung der Kalibrierung ausgelöst durch wenigstens ein vorgebbares Ereignis wenigstens einmal wiederholt wird.

11. Frankieranordnung mit einer Frankiermaschine (2) und einer mit der Frankiermaschine (2) verbindbaren Wiegeeinheit (3), wobei die Frankiermaschine (2) eine erste Verarbeitungseinrichtung (2.1) aufweist, mit der die Wiegeeinheit (3) verbindbar ist, wobei

- die Wiegeeinheit (3) zum Zeitpunkt der Verbindung mit der ersten Verarbeitungseinrichtung (2.1) für einen Vorkalibrierort vorkalibriert ist,
- die erste Verarbeitungseinrichtung (2.1) zum Erfassen der Verbindung der Wiegeeinheit (3) mit der ersten Verarbeitungseinrichtung (2.1) ausgebildet ist und
- die erste Verarbeitungseinrichtung (2.1) und/oder die Wiegeeinheit (3) zum Kalibrieren der Wiegeeinheit (3) für den Standort der Frankiermaschine (2) unter Verwendung einer der Frankiermaschine (2) zugeordneten ersten Kalibriergröße ausgebildet ist und
- eine entfernte Datenzentrale (4) vorgesehen ist,

- die über eine Telekommunikationsverbindung (5) mit der Frankiermaschine (2) verbindbar ist und
- die zum Übermitteln der ersten Kalibriergröße an die Frankiermaschine (2) ausgebildet ist.

**dadurch gekennzeichnet, dass**

- die Datenzentrale (4) zur Übermittlung der ersten Kalibriergröße eingebunden in eine zur Berechnung von Frankierwerten vorgesehene Portotabelle an die Frankiermaschine (2) ausgebildet ist.

12. Frankieranordnung nach Anspruch 11, **dadurch gekennzeichnet, dass** die Frankiermaschine (2) einen mit der ersten Verarbeitungseinrichtung (2.1) verbundenen ersten Speicher (2.3) aufweist, in dem die erste Kalibriergröße gespeichert ist.

13. Frankieranordnung nach Anspruch 12, **dadurch gekennzeichnet, dass**

- in dem ersten Speicher (2.3) eine die erste Kalibriergröße umfassende Mehrzahl von Kalibriergrößen gespeichert ist und
- die erste Verarbeitungseinrichtung (2.1) zur Auswahl der ersten Kalibriergröße aus dieser Mehrzahl von Kalibriergrößen ausgebildet ist.

14. Frankieranordnung nach Anspruch 13, **dadurch gekennzeichnet, dass** die erste Verarbeitungseinrichtung (2.1) zur Auswahl der ersten Kalibriergröße unter Verwendung einer Eingabeinformation eines Nutzers der Frankiermaschine (2) ausgebildet ist.

15. Frankieranordnung nach Anspruch 14, **dadurch gekennzeichnet, dass** die Datenzentrale (4) zur Ermittlung der ersten Kalibriergröße unter Verwendung einer der Frankiermaschine (2) zugeordneten Identifikation ausgebildet ist.

16. Frankieranordnung nach einem der Ansprüche 11 bis 15, **dadurch gekennzeichnet, dass** die Portotabelle zusammen mit der ersten Kalibriergröße in dem ersten Speicher (2.3) gespeichert ist.

17. Frankieranordnung nach einem der Ansprüche 11 bis 16, **dadurch gekennzeichnet, dass** die Portotabelle eine Kalibriertabelle umfasst, die wenigstens die erste Kalibriergröße umfasst.

18. Frankieranordnung nach einem der Ansprüche 11 bis 17, **dadurch gekennzeichnet, dass** die erste Kalibriergröße eine Gravitationskonstante oder ein Korrekturfaktor für eine Gravitationskonstante ist.

19. Frankieranordnung nach einem der Ansprüche 11 bis 18, **dadurch gekennzeichnet, dass**

- die Wiegeeinheit (3) zur Ausgabe von für den Vorkalibrierort kalibrierten erste Messsignalen an die erste Verarbeitungseinrichtung (2.1) ausgebildet ist und die erste Verarbeitungseinrichtung (2.1) zur Umrechnung der ersten Messsignale unter Verwendung der ersten Kalibriergröße in für den Standort der Frankiermaschine (2) kalibrierte zweite Messsignale ausgebildet ist

oder

- die erste Verarbeitungseinrichtung (2.1) zur Weitergabe der ersten Kalibriergröße an die Wiegeeinheit (3) ausgebildet ist und die Wiegeeinheit (3) zur Umrechnung der für den Vorkalibrierort kalibrierten ersten Messsignale unter Verwendung der ersten Kalibriergröße in für den Standort der Frankiermaschine (2) kalibrierte zweite Messsignale ausgebildet ist.

20. Frankieranordnung nach einem der Ansprüche 11 bis 19, **dadurch gekennzeichnet, dass** zur Aktualisierung der Kalibrierung die erste Verarbeitungseinrichtung (2.1) und/oder die Wiegeeinheit (3) zur wenigstens einmaligen, durch wenigstens ein vorgebbares Ereignis ausgelösten Wiederholung der Kalibrierung der Wiegeeinheit für den Standort der Frankiermaschine (2) ausgebildet ist.

21. Frankiermaschine für eine Frankieranordnung (1) nach einem der Ansprüche 11 bis 20, wobei

- die Frankiermaschine (2) eine erste Verarbeitungseinrichtung (2.1) umfasst, die mit einer Wiegeeinheit (3) verbindbar ist,
- die Wiegeeinheit (3) zum Zeitpunkt der Verbindung mit der ersten Verarbeitungseinrichtung (2.1) für einen Vorkalibrierort vorkalibriert ist,
- die erste Verarbeitungseinrichtung (2.1) zum Erfassen der Verbindung der Wiegeeinheit (3) mit der ersten Verarbeitungseinrichtung (2.1) ausgebildet ist und
- die erste Verarbeitungseinrichtung (2.1) zum Kalibrieren der Wiegeeinheit (3) für den Standort der Frankiermaschine (2) unter Verwendung einer der Frankiermaschine (2) zugeordneten ersten Kalibriergröße ausgebildet ist,

**dadurch gekennzeichnet, dass**

- die erste erarbeitungseinrichtung (2.1) dazu ausgebildet ist, als erste Kalibriergröße eine Kalibriergröße zu verwenden, die in eine zur Berechnung von Frankierwerten vorgesehene Portotabelle eingebunden ist.

## Claims

1. Method for fitting, in particular retrofitting, a franking machine (2) with a weighing unit (3), in which, in a connecting step (7.5; 107.5), the weighing unit (3) is connected to a first processing device (2.1) of the franking machine (2), wherein

- in the connecting step (7.5; 107.5), a weighing unit (3) calibrated for a pre-calibration location is connected to the first processing device (2.1),
- in a detection step (7.6; 107.6), which follows the connecting step (7.5; 107.5), the connection of the weighing unit (3) to the first processing device (2.1) is detected, and
- in a calibration step (7.7; 107.7), which follows the detection step (7.6; 107.6), using a first calibration value associated with the franking machine (2), a calibration of the weighing unit (3) for the location of the franking machine (2) is carried out,
**characterised in that**
- the first calibration value is transferred to the franking machine (2) in a transfer step (7.4; 107.4) in a manner integrated into a rate table provided for the calculation of franking values.

2. Method according to claim 1, **characterised in that** the rate table comprises a calibration table which comprises at least the first calibration value.

3. Method according to claim 1 or 2, **characterised in that** the first calibration value is transferred to the franking machine (2) in a transfer step (7.4; 107.4) from a remote data center (4).

4. Method according to claim 3, **characterised in that** the transfer step (7.4) precedes the detection step (7.6).

5. Method according to claim 3 or 4, **characterised in that,** in the transfer step (7.4; 107.4), a plurality of calibration values, including the first calibration value, is transferred to the franking machine (2) and the first calibration value is selected in a selection step from this plurality of calibration values.

6. Method according to claim 5, **characterised in that** the selection of the first calibration value is carried out using an input of a user of the franking machine (2).

7. Method according to one of the preceding claims, **characterised in that** the first calibration value is determined using an identification associated with the franking machine (2).

8. Method according to one of the preceding claims, **characterised in that** the first calibration value is a gravitational constant or a correction factor for a gravitational constant.

9. Method according to one of the preceding claims, **characterised in that** the calibration of the weighing unit (3) is carried out **in that**

   - the weighing unit (3) delivers first measuring signals, calibrated for the pre-calibration location, to the first processing device (2.1), and the first processing device (2.1) converts the first measuring signals received from the weighing unit (3), using the first calibration value, into second measuring signals calibrated for the location of the franking machine (2),
   or
   - weighing unit (3) converts the first measuring signals, calibrated for the pre-calibration location, using the first calibration value, into second measuring signals calibrated for the location of the franking machine (2).

10. Method according to one of the preceding claims, **characterised in that** the calibration step (7.7; 107.7) is repeated at least once for updating the calibration in response to at least one pre-definable event.

11. Franking arrangement with a franking machine (2) and a weighing unit (3) which can be connected to the franking machine (2), wherein the franking machine (2) has a first processing device (2.1) to which the weighing unit (3) can be connected, wherein

   - the weighing unit (3), at the time of the connection to the first processing device (2.1), is pre-calibrated for a pre-calibration location,
   - the first processing device (2.1) is designed for the detection of the connection of the weighing unit (3) to the first processing device (2.1),
   and
   - the first processing device (2.1) and/or the weighing unit (3) is designed for the calibration of the weighing unit (3) for the location of the franking machine (2) using a first calibration value associated with the franking machine (2), and
   - a remote data center (4) is provided,
   - which can be connected to the franking machine (2) by means of a telecommunication connection (5), and
   - which is designed for the transfer of the first calibration value to the franking machine (2)

   **characterised in that**

   - the data central unit (4) is designed for the transfer of the first calibration value to the franking machine (2) in a manner integrated into a rate table provided for the calculation of franking values.

12. Franking arrangement according to claim 11, **characterised in that** the franking machine (2) has a first memory (2.3) connected to the first processing device (2.1), in which the first calibration value is stored.

13. Franking arrangement according to claim 12, **characterised in that**

   - a plurality of calibration values, including the first calibration value, is stored in the first memory (2.3) and
   - the first processing device (2.1) is designed for the selection of the first calibration value from this plurality of calibration values.

14. Franking arrangement according to claim 13, **characterised in that** the first processing device (2.1) is designed to select the first calibration value using input information of a user of the franking machine (2).

15. Franking arrangement according to claim 14, **characterised in that** the data central unit (4) is designed for the determination of the first calibration value using an identification associated with the franking machine (2).

16. Franking arrangement according to one of claims 11 to 15, **characterised in that** the rate table is stored in the first memory (2.3) together with the first calibration value.

17. Franking arrangement according to one of claims 11 to 16, **characterised in that** the rate table comprises a calibration table, which comprises at least the first calibration value.

18. Franking arrangement according to one of claims 11 to 17, **characterised in that** the first calibration value is a gravitational constant or a correction factor for a gravitational constant.

19. Franking arrangement according to one of claims 11 to 18, **characterised in that**

- the weighing unit (3) is designed for the output of first measuring signals, calibrated for the pre-calibration location, to the first processing device (2.1), and the first processing device (2.1) is designed to convert the first measuring signals, using the first calibration value, into second measuring signals calibrated for the location of the franking machine (2),
or
- the first processing device (2.1) is designed for the forwarding of the first calibration value to the weighing unit (3), and the weighing unit (3) is designed for the conversion of the first measuring signals, calibrated for the pre-calibration location, using the first calibration value, into second measuring signals calibrated for the location of the franking machine (2).

20. Franking arrangement according to one of claims 11 to 19, **characterised in that,** for updating the calibration, the first processing device (2.1) and/or the weighing unit (3) is designed for at least one repetition of the calibration of the weighing unit for the location of the franking machine (2), said repetition being executed in response to at least one pre-definable event.

21. Franking machine for a franking arrangement (1) according to one of claims 11 to 20, wherein

- the franking machine (2) comprises a first processing device (2.1), which can be connected to a weighing unit (3),
- the weighing unit (3), at the time of the connection to the first processing device (2.1), being pre-calibrated for a pre-calibration location,
- the first processing device (2.1) being designed for the detection of the connection of the weighing unit (3) to the first processing device (2.1),
and
- the first processing device (2.1) being designed for the calibration of the weighing unit (3) for the location of the franking machine (2) using a first calibration value associated with the franking machine (2),
**characterised in that**

- the first processing device (2.1) is designed to use, as the first calibration value, a calibration value which is integrated into a rate table provided for the calculation of franking values.

**Revendications**

1. Méthode d'équipement, en particulier d'équipement ultérieur, d'une machine à affranchir (2) avec une unité de pesée (3), dans laquelle, dans une étape de connexion (7.5 ; 107.5), l'unité de pesée (3) est connectée à un premier dispositif de traitement (2.1) de la machine à affranchir (2), où

- dans l'étape de connexion (7.5 ; 107.5), une unité de pesée (3) étalonnée pour un endroit de pré-étalonnage est connectée au premier dispositif de traitement (2.1),
- dans une étape de détection (7.6 ; 107.6), qui suit l'étape de connexion (7.5 ; 107.5), la connexion de l'unité de pesée (3) au premier dispositif de traitement (2.1) est détectée, et
- dans une étape d'étalonnage (7.7 ; 107.7), qui suit l'étape de détection (7.6 ; 107.6), en utilisant une valeur d'étalonnage associée à la machine à affranchir (2), un étalonnage de l'unité de pesée (3) pour l'endroit de la machine à affranchir (2) est exécuté,

**caractérisée en ce que**

- la première valeur d'étalonnage est transférée à la machine à affranchir (2) dans une étape de transfert (7.4 ; 107.4) de manière intégrée dans un tableau de frais de port fourni pour le calcul de valeurs d'affranchissement.

2. Méthode selon la revendication 1, **caractérisée en ce que** le tableau de frais de port comprend un tableau d'étalonnage qui comprend au moins la première valeur d'étalonnage.

3. Méthode selon la revendication 1 ou 2, **caractérisée en ce que** la première valeur d'étalonnage est transférée à la machine à affranchir (2) dans une étape de transfert (7.4 ; 107.4) d'un centre de données éloigné (4).

4. Méthode selon la revendication 3, **caractérisée en ce que** l'étape de transfert (7.4) précède l'étape de détection (7.6).

5. Méthode selon la revendication 3 ou 4, **caractérisée en ce que,** dans l'étape de transfert (7.4 ; 107.4), une pluralité de valeurs d'étalonnage, incluant la première valeur d'étalonnage, est transférée à la machine à affranchir (2) et la première valeur d'étalonnage est sélectionnée dans une étape de sélection à partir de cette pluralité de valeurs d'étalonnage.

6. Méthode selon la revendication 5, **caractérisée en ce que** la sélection de la première valeur d'étalonnage est exécutée en utilisant une entrée d'un utilisateur de la machine à affranchir (2).

7. Méthode selon l'une des revendications précédentes, **caractérisée en ce que** la première valeur d'étalonnage est déterminée en utilisant une identification associée à la machine à affranchir (2).

8. Méthode selon l'une des revendications précédentes, **caractérisée en ce que** la première valeur d'étalonnage est une constante gravitationnelle ou un facteur de correction pour une constante gravitationnelle.

9. Méthode selon l'une des revendications précédentes, **caractérisée en ce que** l'étalonnage de l'unité de pesée (3) est exécuté **en ce que**

- l'unité de pesée (3) fournit des premiers signaux de mesure, étalonnés pour l'endroit de pré-étalonnage, au premier dispositif de traitement (2.1), et le premier dispositif de traitement (2.1) convertit les premiers signaux de mesure reçus de l'unité de pesée (3), en utilisant la première valeur d'étalonnage, en seconds signaux de mesure étalonnés pour l'endroit de la machine à affranchir (2),

ou

- l'unité de pesée (3) convertit les premiers signaux de mesure, étalonnés pour l'endroit de pré-étalonnage, en utilisant la première valeur d'étalonnage, en seconds signaux de mesure étalonnés pour l'endroit de la machine à affranchir (2).

10. Méthode selon l'une des revendications précédentes, **caractérisée en ce que** l'étape d'étalonnage (7.7 ; 107.7) est répétée au moins une fois pour mettre à jour l'étalonnage en réponse à au moins un événement pré-définissable.

11. Aménagement d'affranchissement avec une machine à affranchir (2) et une unité de pesée (3) qui peut être connectée à la machine à affranchir (2), où la machine à affranchir (2) a un premier dispositif de traitement (2.1) auquel l'unité de pesée (3) peut être connectée, où

- l'unité de pesée (3), au moment de la connexion au premier dispositif de traitement (2.1), est pré-étalonnée pour un endroit de pré-étalonnage,
- le premier dispositif de traitement (2.1) est conçu pour la détection de la connexion de l'unité de pesée (3) au premier dispositif de traitement (2.1),
et
- le premier dispositif de traitement (2.1) et/ou l'unité de pesée (3) est conçu pour l'étalonnage de l'unité de pesée (3) pour l'endroit de la machine à affranchir (2) en utilisant une première valeur d'étalonnage associée à la machine à affranchir (2), et
- un centre de données éloigné (4) est prévue,

- lequel peut être connecté à la machine à affranchir (2) au moyen d'une connexion de télécommunication (5), et
- lequel est conçu pour le transfert de la première valeur d'étalonnage à la machine à affranchir (2)

**caractérisé en ce que**

- le centre de données (4) est conçu pour le transfert de la première valeur d'étalonnage à la machine à affranchir (2) de manière intégrée dans un tableau de frais de port fourni pour le calcul de valeurs d'affranchissement.

**12.** Aménagement d'affranchissement selon la revendication 11, **caractérisé en ce que** la machine à affranchir (2) a une première mémoire (2.3) connectée au premier dispositif de traitement (2.1), dans laquelle la première valeur d'étalonnage est mémorisée.

**13.** Aménagement d'affranchissement selon la revendication 12, **caractérisé en ce que**

- une pluralité de valeurs d'étalonnage est mémorisée dans la première mémoire (2.3), y compris la première valeur d'étalonnage, et
- le premier dispositif de traitement (2.1) est conçu pour la sélection de la première valeur d'étalonnage à partir de cette pluralité de valeurs d'étalonnage.

**14.** Aménagement d'affranchissement selon la revendication 13, **caractérisé en ce que** le premier dispositif de traitement (2.1) est conçu pour sélectionner la première valeur d'étalonnage en utilisant des informations entrées d'un utilisateur de la machine à affranchir (2).

**15.** Aménagement d'affranchissement selon la revendication 14, **caractérisé en ce que** l'unité centrale de données (4) est conçue pour la détermination de la première valeur d'étalonnage en utilisant une identification associée à la machine à affranchir (2).

**16.** Aménagement d'affranchissement selon l'une des revendications 11 à 15, **caractérisé en ce que** le tableau de frais de port est mémorisé dans la première mémoire (2.3) conjointement à la première valeur d'étalonnage.

**17.** Aménagement d'affranchissement selon l'une des revendications 11 à 16, **caractérisé en ce que** le tableau de frais de port comprend un tableau d'étalonnage qui comprend au moins la première valeur d'étalonnage.

**18.** Aménagement d'affranchissement selon l'une des revendications 11 à 17, **caractérisé en ce que** la première valeur d'étalonnage est une constante gravitationnelle ou un facteur de correction pour une constante gravitationnelle.

**19.** Aménagement d'affranchissement selon l'une des revendications 11 à 18, **caractérisé en ce que**

- l'unité de pesée (3) est conçue pour la sortie de premiers signaux de mesure, étalonnés pour l'endroit de pré-étalonnage, vers le premier dispositif de traitement (2.1), et le premier dispositif de traitement (2.1) est conçu pour convertir les premiers signaux de mesure, en utilisant la première valeur d'étalonnage, en seconds signaux de mesure étalonnés pour l'endroit de la machine à affranchir (2),

ou

- le premier dispositif de traitement (2.1) est conçu pour le réacheminement de la première valeur d'étalonnage à l'unité de pesée (3), et l'unité de pesée (3) est conçue pour la conversion des premiers signaux de mesure, étalonnés pour l'endroit de pré-étalonnage, en utilisant la première valeur d'étalonnage, en seconds signaux de mesure étalonnés pour l'endroit de la machine à affranchir (2).

**20.** Aménagement d'affranchissement selon l'une des revendications 11 à 19, **caractérisé en ce que,** pour mettre à jour l'étalonnage, le premier dispositif de traitement (2.1) et/ou l'unité de pesée (3) est conçu pour au moins une répétition de l'étalonnage de l'unité de pesée pour l'endroit de la machine à affranchir (2), ladite répétition étant déclenchée par au moins un événement pré-définissable.

**21.** Machine à affranchir pour un aménagement d'affranchissement (1) selon l'une des revendications 11 à 20, où

- la machine à affranchir (2) comprend un premier dispositif de traitement (2.1), qui peut être connecté à une unité de pesée (3),
- l'unité de pesée (3), au moment de la connexion au premier dispositif de traitement (2.1), étant pré-étalonnée pour un endroit de pré-étalonnage,
- le premier dispositif de traitement (2.1) étant conçu pour la détection de la connexion de l'unité de pesée (3) au premier dispositif de traitement (2.1),
et
- le premier dispositif de traitement (2.1) étant conçu pour l'étalonnage de l'unité de pesée (3) pour l'endroit de la machine à affranchir (2) en utilisant une première valeur d'étalonnage associée à la machine à affranchir (2),

**caractérisée en ce que**

- le premier dispositif de traitement (2.1) est conçu pour utiliser, comme première valeur d'étalonnage, une valeur d'étalonnage qui est intégrée dans un tableau de frais de port fourni pour le calcul de valeurs d'affranchissement.

Fig. 1

Fig. 2

107.1 — START

107.2 — Start
Frankiermaschine

107.5 — Verbindung
Wiegeeinheit mit
Frankiermaschine

107.6 — Erfassung der
Verbindung

107.3 — 
J    N
Kommunikation ?

107.4 — Übermittlung
Portotabelle
mit erster
Kalibriergröße

107.7 — Kalibrierung

107.8 —
N    J
Ereignis?

107.9 —
N    J
Stop?

107.10 — STOP

Fig. 3

19

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4408232 A1
- DE 19619854 A1
- FR 2818374
- US 5661268 A
- EP 1239268 A